Europäisches Patentamt

European Patent Office

Office européen des brevets

(19)

(11) Veröffentlichungsnummer: **0 394 541 B1**

## (12) EUROPÄISCHE PATENTSCHRIFT

(45) Veröffentlichungstag der Patentschrift: **02.12.92**

(51) Int. Cl.⁵: **C02F 1/52**, C02F 1/62

(21) Anmeldenummer: **89107819.8**

(22) Anmeldetag: **28.04.89**

Die Akte enthält technische Angaben, die nach
dem Eingang der Anmeldung eingereicht wurden
und die nicht in dieser Patentschrift enthalten sind.

(54) **Verfahren zum Entfernen von Kupfer aus Abwasser.**

(43) Veröffentlichungstag der Anmeldung:
**31.10.90 Patentblatt 90/44**

(45) Bekanntmachung des Hinweises auf die
Patenterteilung:
**02.12.92 Patentblatt 92/49**

(84) Benannte Vertragsstaaten:
**BE CH DE ES FR IT LI NL SE**

(56) Entgegenhaltungen:
**US-A- 3 740 331**
**US-A- 4 102 784**

(73) Patentinhaber: **SIEMENS AKTIENGESELL-
SCHAFT
Wittelsbacherplatz 2
W-8000 München 2(DE)**

(72) Erfinder: **Adloff, Margit, Dipl.-Ing.
Löwenberger Strasse 5
W-8500 Nürnberg(DE)**
Erfinder: **Hollwedel-Grossmann, Ursula,
Dr.rer.nat.
Fröschau 14
W-8563 Schnaittach(DE)**

# Beschreibung

Die Erfindung betrifft ein Verfahren zum Entfernen von Kupfer aus Abwasser, das mindestens einen stabilen Kumpferkomplex, insbesondere mindestens einen Kupferethylendiaminkomplex, enthält und insbesondere Abwasser eines Verfahrens zur Dampferzeugerreinigung ist.

Derartiges Abwasser fällt beispielsweise bei der Reinigung von Dampferzeugern an, die zumindest teilweise aus Kupfer oder aus Kupferverbindungen bestehen. Bekannte Reinigungsverfahren, beispielsweise das Verfahren anch der US-PS 4 720 306 sehen vor, daß im Dampferzeuger Ablagerungen aus Kupferverbindungen in in Wasser gelöste stabile Kupferkomplexe umgewandelt werden. Die nach dem chemischen Reinigungsprozeß verbleibende Lösung wird aus dem Dampferzeuger abgelassen und ist als Abwasser zu beseitigen.

Abwasser der Dampferzeugerreinigung enthält häufig einen Kupferethylendiaminkomplex. Dieser Komplex, aber auch andere stabile Kupferkomplexe, sollen nicht unmittelbar den vorhandenen Abwasserreinigungsanlagen zugeleitet werden.

Bisher sind Verfahren zur Entfernung von $Cu^{2+}$ aus einer Lösung bekannt. Diese Verfahren sind auch beim Entfernen von Cu aus Komplexen anwendbar. Sie führen aber dort nur zu einem geringen Erfolg. Insbesondere stabile Kupferkomplexe, wie Kupferethylendiaminkomplexe, sind mit bekannten Verfahren nicht befriedigend aus einer Lösung zu entfernen.

Ein aus "Galvanotechnik" 68 (1977) Nr. 11, Seiten 975 bis 979 bekanntes Verfahren sieht beispielsweise die Zugabe von großen Mengen Sulfid vor. Bei Zugabe von Alkalisulfiden bei einem pH-Wert unter 5 erfolgt eine Ausfällung von Kupfersulfid. Dabei entsteht aber toxischer Schwefelwasserstoff aus dem in großem Überschuß zugegebenen, gelösten Sulfid.

Ein anderes aus dem gleichen Aufsatz bekanntes Verfahren sieht die Zugabe von Eisensulfat bei einem pH-Wert größer als 12 vor. Der Nachteil dieses Verfahrens ist, daß etwa 150 ppm Eisen in Lösung gehen.

Aus der US-A- 3 740 331 ist ein Verfahren zum Reinigen einer neben anderen Schwermetallen auch Cu- enthaltenen Lösung bekannt, bei dem gemäß Anspruch 1 ein Schwermetallsalz und ein Sulfid eingesetzt werden. Damit soll die Aufgabe gelöst werden, daß kein Wasserstoffsulfid entsteht und daß keine löslichen Sulfidkomplexe gebildet werden.

Aus der US-A 4 102 784 ist ein Verfahren zum Entfernen von Kupferkomplexen mittels Eisensulfat und Natriumsulfid bekannt.

Mit den geschilderten bekannten Verfahren und auch mit allen anderen bekannten Verfahren, bei denen zum Teil handelsübliche Spezialprodukte eingesetzt werden, ist das Cu aus stabilen Kupferkomplexen, insbesondere aus dem Kupferethylendiaminkomplex nicht auszufällen. Darüber hinaus bleiben beim zuerst genannten bekannten Verfahren nach dem Ausfällen und Abtrennen des Kupfersulfids in der Lösung Sulfide zurück, die auf einen notwendigen Sulfidüberschuß zurückzuführen sind. Die Entfernung der verbleibenden Sulfide aus dem Abwasser erfordern einen weiteren Verfahrensschritt, z.B. Oxidation des Sulfides zu Sulfat. Beim an zweiter Stelle genannten bekannten Verfahren verbleiben Eisenionen in der Lösung, die ebenfalls vor einer Ableitung des Abwassers in einem weiteren Verfahrensschritt entfernt werden müssen.

Der Erfindung liegt die Aufgabe zugrunde, ein Verfahren zum Entfernen von Kupfer aus Abwasser anzugeben, das mit einfachen Mitteln das Entfernen von Kupfer aus stabilen Komplexen, insbesondere aus Kupferethylendiaminkomplexen in Abwasser ermöglicht. Dabei soll das Abwasser nach Fällung und Schlammabtrennung keine neu gelösten Stoffe enthalten, die wieder entfernt werden müßten.

Die Aufgabe wird gemäß der Erfindung dadurch gelöst, daß dem Abwasser mindestens eine zweiwertige Eisenverbindung, insbesondere $FeSO_4.7H_2O$, zugegeben wird, bis das Molverhältnis von Cu : Fe zwischen 1 : 0,1 und 1 : 0,3 beträgt, und mindestens ein Sulfid, insbesondere $Na_2S$, zugegeben wird, bis das Molverhältnis von Cu : Sulfid zwischen 1 : 1 und 1 : 1,2 beträgt und daß dann ausgefällte Stoffe abgetrennt werden.

Bedingt durch die gemäß der Erfindung vorgesehenen Molverhältnisse gelingt es, Kupfer aus stabilen Komplexen, wie z.B. aus dem sehr stabilen Kupferethylendiaminkomplex, in Abwasser zu entfernen. Dabei wird Kupfersulfid ausgefällt. In der verbleibenden Lösung ist vorteilhafterweise kein Sulfid mehr nachweisbar. Das ist darauf zurückzuführen, daß mit dem Verfahren nach der Erfindung Sulfid und auch Eisen nicht im Überschuß sondern in einem bestimmten Molverhältnis zu Kupfer eingesetzt werden. Dieses Molverhältnis genügt der Formel:

$$mol \ Fe + mol \ Cu < mol \ Sulfid$$

Die speziellen Molverhältnisse sind auch der Grund dafür, daß mit dem Verfahren nach der Erfindung selbst Kupfer aus stabilen Komplexen, wie Kupferethylendiaminkomplexen, weitgehend vollständig zu entfernen sind.

Beispielsweise wird für die Durchführung des Verfahrens nach der Erfindung ein pH-Wert zwischen 8 und 11 eingestellt. Ein solcher pH-Wert ist notwendig, damit nicht zunächst als Eisensulfid gebundenes Eisen als Hydroxid ausfallen kann.

Mit dem Verfahren nach der Erfindung wird insbesondere der Vorteil erzielt, daß ausschließlich mit kostengünstigen Chemikalien, wie $FeSO_4.7H_2O$ und $Na_2S$ Kupfer aus stabilen Komplexen, insbesondere Kupferethylendiaminkomplexen zu entfernen ist, ohne daß das Restabwasser dann Sulfide oder sogar Schwefelwasserstoff in unzulässigen Konzentrationen enthält.

Mit dem Verfahren nach der Erfindung wird im Restabwasser ein Kupfergehalt unter 1 ppm erzielt, wobei der Eisengehalt des Restabwassers ebenfalls unter 1 ppm liegt und Sulfid mit Bleiazetatpapier nicht mehr nachweisbar ist.

Die notwendige Reaktionszeit, die für das Verfahren nach der Erfindung erforderlich ist, richtet sich nach der Kupferkonzentration des unbehandelten Abwassers. Bei einem Kupfergehalt von 0,5 g/l beträgt die Reaktionszeit ungefähr 15 min. Bei 3 g Cu/l sind 30 min. notwendig und bei 6 g Cu/l beträgt die Reaktionszeit 45 min.

**Patentansprüche**

1. Verfahren zum Entfernen von Kupfer aus Abwasser, das mindestens einen stabilen Kupferkomplex, insbesondere mindestens einen Kupferethylendiaminkomplex, enthält und insbesondere Abwasser eines Verfahrens zur Dampferzeugerreinigung ist,
**dadurch gekennzeichnet,** daß dem Abwasser mindestens eine zweiwertige Eisenverbindung, insbesondere $FeSO_4.7H_2O$, zugegeben wird, bis das Molverhältnis von Cu : Fe zwischen 1 : 0,1 und 1 : 0,3 beträgt, und mindestens ein Sulfid, insbesondere $Na_2S$, zugegeben wird, bis das Molverhältnis von Cu : Sulfid zwischen 1 : 1 und 1 : 1,2 beträgt und daß dann ausgefällte Stoffe abgetrennt werden.

2. Verfahren nach Anspruch 1,
**dadurch gekennzeichnet,** daß ein pH-Wert zwischen 8 und 11 eingestellt wird.

**Claims**

1. Process for removing copper from effluent which contains at least one stable copper complex, in particular at least one copper ethylene diamine complex, and in particular is effluent of a process for steam generator cleaning, characterised in that at least one bivalent iron compound, in particular $FeSO_4.7H_2O$ is added to the effluent until the molar ratio of Cu : Fe is between 1 : 0.1 and 1 : 0.3, and at least one sulphide, in particular $Na_2S$ is added until the molar ratio of Cu : sulphide is between 1 : 1 and 1 : 1.2, and in that precipitated materials are then separated.

2. Process according to claim 1, characterised in that a pH value of between 8 and 11 is set.

**Revendications**

1. Procédé pour éliminer du cuivre d'eaux usées, qui contiennent au moins un complexe stable du cuivre, notamment au moins un complexe de cuivre et d'éthylènediamine, et notamment d'eaux usées d'un procédé d'épuration de générateur de vapeur, caractérisé en ce qu'il consiste à ajouter aux eaux usées au moins un composé divalent du fer, notamment $FeSO_4.7H_2O$, jusqu'à ce que le rapport molaire du Cu au Fe soit compris entre 1:0,1 et 1:0,3, et à ajouter au moins un sulfure, notamment $Na_2S$, jusqu'à ce que le rapport molaire du Cu au sulfure soit compris entre 1:1 et 1:1,2, et à séparer ensuite le produit précipité.

2. Procédé suivant la revendication 1, caractérisé en ce qu'il consiste à régler le pH entre 8 et 11.